# EUROPÄISCHE PATENTSCHRIFT

(11) **EP 1 302 228 B1**
(45) Veröffentlichungstag und Bekanntmachung des Hinweises auf die Patenterteilung: **12.09.2007**
(21) Anmeldenummer: 02405703.6
(22) Anmeldetag: 16.08.2002
(51) Int. Cl.: B01D 29/54, B01D 29/58, B01D 63/06

(54) **Filtrationseinheit**
Filter
Filtre

(30) Priorität: 11.10.2001 EP 01810992
(43) Veröffentlichungstag der Anmeldung: 16.04.2003
(73) Patentinhaber: Filtrox AG, 9000 St. Gallen (CH)
(72) Erfinder: Gans, Ulrich, 9214 Kradolf-Schönenberg (CH); Schiess, Valentin, 4055 Basel (CH)
(74) Vertreter: Hepp, Dieter

(56) Entgegenhaltungen:
- EP-A- 0 217 568
- US-A- 4 239 624

## Beschreibung

Die Erfindung betrifft eine Methode zum Filtrieren von Flüssigkeiten, eine Filtrationseinheit und eine Vorrichtung zur Filtration von Flüssigkeiten, enthaltend eine erfindungsgemässe Filtrationseinheit mit den Merkmalen des Oberbegriffs der unabhängigen Patentansprüche.

Filtermodule mit keramischen Filterelementen sind bekannt und werden beispielsweise für die Filtration von trüben Flüssigkeiten im Bereich der Lebensmitteltechnologie bzw. im biotechnologischen Bereich routinemässig eingesetzt. Zur Erzielung von hohen Durchsatzraten wird dabei die Methode der Crossflow-Filtration angewendet. Hierbei wird Unfiltrat tangential zur Filtermembran geführt und ermöglicht eine gleichzeitige Entfernung der von der Membran zurückgehaltenen Bestandteile durch das im Kreislauf bewegte Unfiltrat.

Die Offenlegungsschrift DE 198 46 041 beschreibt ein Membranmodul, das eine Anzahl von stabförmigen, keramischen Filterelementen aufweist. Die Ränder der Stirnseiten dieser Filterelemente werden unter Verwendung von Dichtungsmitteln in entsprechende Öffnungen eines Deckels gefasst. .

EP 208 450 beschreibt eine Filtrationsvorrichtung für die Bierfiltration, die auf die Crossflow-Filtrationsmethode zurückgreift. Die Filterelemente bestehen ebenfalls aus keramischen Material und weisen eine Mehrzahl an durchgehenden Kanälen auf, durch die das Unfiltrat geführt wird.

Die in den beiden Dokumenten beschriebenen Filtermodule weisen jedoch den Nachteil auf, dass die Filtermodule jeweils nur in einer Richtung vom Unfiltrat durchströmt werden. Bei der Verwendung von mehreren dieser Filtermodulen in einer Filtrationsvorrichtung kommt es daher zu einer komplexen Flüssigkeitsführung, die insbesondere im Fall eines notwendigen Wechsels eines Filtermoduls oder eines Filterelementes (Keramikstab) einen erhöhten Arbeitsaufwand mit sich bringt.

D1 (EP 0217568) offenbart eine Filtrationseinheit zur Crossflowfiltration von Flüssigkeiten mit zwei Gruppen von Filterelementen, die auf konzentrischen Kreisen angeordnet sein können.

Die Aufgabe der vorliegenden Erfindung ist es, die Nachteile des Bekannten zu vermeiden, insbesondere eine kompakte Filtrationseinheit zu schaffen, die eine vereinfachte Handhabung bei gleichzeitiger Erhaltung einer hohen Durchflussrate erlaubt.

Die Erfindung löst diese Aufgabe entsprechend den Merkmalen des kennzeichnenden Teils der Ansprüche1 und 9.

Gemäß der Erfindung enthält das Filtergehäuse eine geradzahlige Anzahl, die grösser ist als zwei, an Gruppen von keramischen Filterelementen.

Gemäß der Erfindung enthält die Filtrationseinheit auf der der Zuleitung und der Ableitung des Unfiltrats gegenüberliegenden Seite des Filtergehäuses mindestens ein Mittel zur Umkehrung der Durchflussrichtung des Unfiltrats.

Gemäß der Erfindung weist die Filtrationseinheit auf der Seite der Zuleitung und der Ableitung zusätzlich ein Mittel zur Umkehrung der Durchflussrichtung auf. Dieses Mittel erlaubt eine Umkehrung der Durchflussrichtung, so dass innerhalb der Filtrationseinheit jeweils zwei unabhängige Bereiche mit identischer Durchflussrichtung bestehen.

Die Filtrationseinheit zur Crossflow-Filtration von Flüssigkeiten enthält ein Filtergehäuse zum Ableiten des Filtrates. Dieses Filtergehäuse enthält weiterhin stabförmige, poröse keramische Filterelemente zur Durchleitung des Unfiltrats. Die Filterelemente weisen achsparallele Durchgangsbohrungen auf, deren Innenseiten mit einem Membranmaterial beschichtet sind. Diese Filterelemente zeichnen sich dadurch aus, dass sie in Gruppen angeordnet sind, wobei die Anzahl der Gruppen eine gerade Zahl größer als 2 ist. Diese Gruppen werden mit einer Anordnung zum Leiten des Unfiltrats derart verbunden, dass das Unfiltrat in der ersten Gruppe von Filterelementen eine entgegengesetzte Strömungsrichtung wie in der zweiten Gruppe aufweist. Diese Führungsweise ermöglicht eine raumsparende Installation der Filtrationseinheit innerhalb einer Filtrationsvorrichtung. Die Anordnung der Filterelemente einer jeden Gruppe erfolgt auf mehreren konzentrischen Kreisen, jeweils bezogen zum Mittelpunkt der Filtrationseinheit. Die Filterelemente einer ersten Gruppe sind gegenüber denen der zweiten Gruppe näher zum Mittelpunkt der Filtrationseinheit angeordnet. Als Mittelpunkt ist diejenige Längsachse zu verstehen, die sich im Zentrum des Filtergehäuses und in paralleler Ausrichtung zu den Filterelementen befindet. An der Position dieser imaginären Längsachse kann auch ein Filterelement platziert sein. Eine solche Anordnung der Filterelemente auf konzentrischen Kreisen ergibt vorteilhafte strömungstechnische Verhältnisse. Die einzelnen Filterelemente werden gleichmässiger vom zu filtrierenden Medium angeströmt bzw. durchströmt, womit die Membranen gleichmässiger ausgenutzt werden können und die Filtrationsleistung gesteigert werden kann. Die Anzahl der Kreise, auf denen die Filterelemente positioniert werden, ist jeweils von der Gesamtzahl der Filterelemente sowie von den räumlichen Dimensionen der Filtrationseinheit abhängig und kann entsprechend den jeweiligen Erfordernissen variieren.

In einer bevorzugten Ausführungsform wird das Unfiltrat auf einer Seite des Filtergehäuses zugeleitet und auf derselben Seite abgeleitet. Diese Art der Anordnung erlaubt ebenfalls eine einfache Handhabung im Hinblick auf einen Austausch des Filtergehäuses.

In einer weiteren Ausführungsform der Filtrationseinheit schliesst die Zuleitung die erste Gruppe der Filterelemente des Filtergehäuses an und eine Ableitung des Unfiltrats schliesst an die andere Gruppe der Filterelemente an. Diese Ausführung erlaubt eine direkte Verbindung des Filtergehäuses an die Zuleitung und Ableitung, ohne dass weitere Mittel zur Verknüpfung erforderlich sind.

Die Fliessrichtung des Unfiltrats der Zuleitung und der Ableitung ist nicht festgelegt. Das Unfiltrat kann ebenso über die Zuleitung aus den Filterelementen herausgeleitet werden, wie es über die Ableitung in die Filterelemente hineingeleitet werden kann. Ohne diese Notwendigkeit einer vordefinierten Fliessrichtung ist die Filtrationseinheit flexibel einsetzbar.

Eine besondere Ausführungsform der Filtrationseinheit zeichnet sich dadurch aus, dass die Zuleitung und die Ableitung des Unfiltrats gegeneinander abgedichtet an das Filtergehäuses des Filtermoduls angeflanscht sind. Die gegenseitige Abdichtung verhindert Kurzschlussströme des Unfiltrats und eine Reduzierung der Durchsatzmenge des Unfiltrats durch die Filterelemente.

Ebenfalls eine bevorzugte Ausführungsform der Filtrationseinheit weist eine unmittelbare, parallel nebeneinander liegende Anordnung von Filterelementen wenigstens einer Gruppe auf. Eine derartige Anordnung erlaubt eine vorteilhafte Ausgestaltung der Zuleitung und Ableitung.

In einer bevorzugten Form der Filtrationseinheit sind das Mittel zur Umkehrung der Durchflussrichtung und/oder die Zuleitung und/oder die Ableitung des Unfiltrats fest mit dem Gehäuse verbunden. Die jeweilige feste Verbindung mittels Kleben, Schweissen, Verschrauben, Verpressen etc. ermöglicht dem Anwender eine einfachere Installation der Filtrationseinheit. Gleichzeitig wird eine ausreichende Dichtigkeit hergestellt.

Weiterhin bevorzugt weist die Filtrationseinheit mindestens eine Filtratauslassöffnung sowie je eine Entlüftungsöffnung für den Filtrat- und Unfiltratraum am Filtergehäuse auf.

Eine Vorrichtung zur Filtration von Flüssigkeiten enthält mindestens eine erfindungsgemässen Filtrationseinheit und weiterhin wenigstens eine Pumpe zum Pumpen des Unfiltrats durch die Filtrationseinheit. Der Einsatz mehrerer solcher Filtrationseinheiten innerhalb einer Vorrichtung eröffnet die Möglichkeit, gezielt eine Anpassung der Durchsatzmengen vornehmen zu können. Mittels einer Pumpe in einer solchen Vorrichtung kann ein annähernd konstanter Durchfluss an Unfiltrat durch die Filtrationseinheiten sichergestellt werden, ohne dass zu grosse Unterschiede der Fliessgeschwindigkeit innerhalb des Systems auftreten.

Ein Verfahren zur Filtration von Flüssigkeiten in einer Filtrationseinheit gemäss der Erfindung zeichnet sich durch die folgende Schritte aus:
a) Zuführung des Unfiltrats durch ein Zuleitungselement zu einem Filtermodul mit wenigstens zwei Filterelementen;
b) Durchführung des Unfiltrats durch mindestens eine Gruppe von Filterelementen;
c) Umkehrung der Fliessrichtung des Unfiltrats mit wenigstens einem Mittel zur Umkehrung der Fliessrichtung;
d) Durchführung des Unfiltrats durch die zweite Gruppe von Filterelementen, die nicht für Schritt b) eingesetzt werden, mit einer der Fliessrichtung des Schrittes b) entgegengesetzten Fliessrichtung; und
e) Ausleitung des nicht filtrierten Unfiltrats durch eine Ableitung mit einer von der Zuleitungsflüssigkeit getrennten Flüssigkeitsführung.

In einer weiteren Ausführungsform des Verfahrens wird das Unfiltrat nach dem Schritt d) wenigstens einer weiteren Schrittfolge c), d), c), d), durch wenigstens zwei weitere Gruppen von Filterelementen innerhalb der Filtrationseinheit unterworfen.

Eine bevorzugte Form des Verfahrens zeichnet sich durch eine serielle oder parallele Anordnung mehrerer Filtrationseinheiten aus.

Die Erfindung wird im folgenden an einem Ausführungsbeispiel und anhand der Zeichnungen näher erläutert. Es zeigen
- Fig. 1: einen Längsschnitt durch eine Filtrationseinheit;
- Fig. 2: einen Querschnitt einer Filtrationseinheit;
- Fig. 3: eine schematische Darstellung zweier erfindungsgemässer Filtrationseinheiten in
- (a): paralleler Anordnung; und
- (b): serieller Anordnung, wobei hier innerhalb der Filtrationseinheit eine Mehrfachumlenkung erfolgt;
- Fig. 4 (a) und (b): jeweils einen Querschnitt einer weiteren Ausführungsform einer Filtrationseinheit.

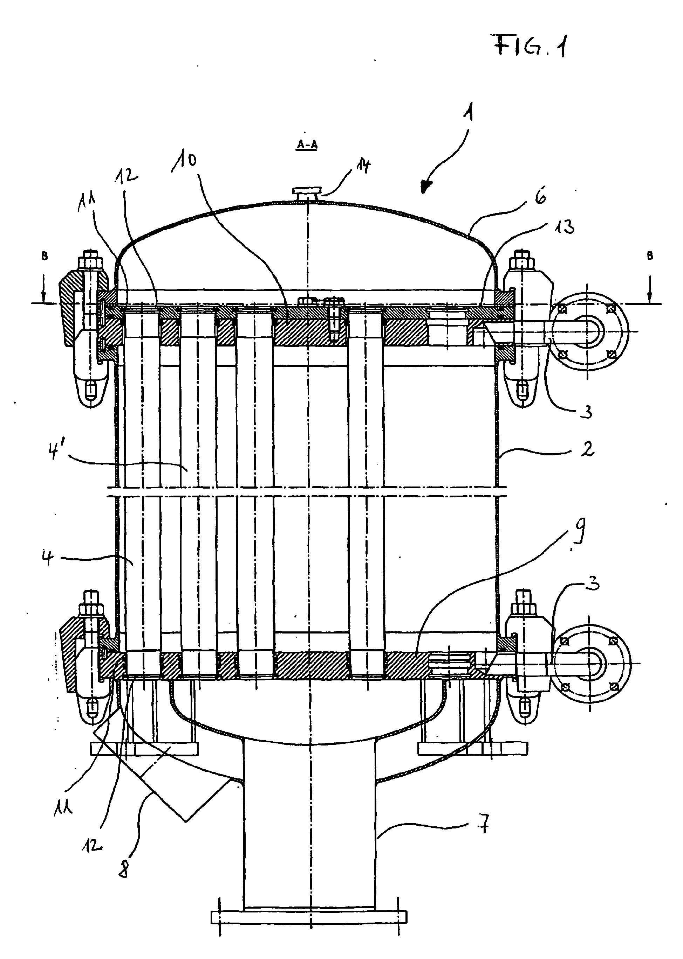

Ein Ausführungsbeispiel der Filtrationseinheit zeigt Fig. 1. Das Filtergehäuse 2 bildet zusammen mit den Filterelementen 4, 4' und den Fassungselementen 9, 10 einen abgeschlossenen Raum zur Ableitung des Filtrats. Geeignete Materialien für das Filtergehäuse 2 sind sowohl rostfreier Edelstahl wie auch Normalstahl mit einer entsprechenden Kunststoffbeschichtung. Einzelne Elemente des Filtergehäuses 2 können auch in Kunststoff ausgeführt sein. Die Filtratauslassöffnungen dienen gleichzeitig auch zur Entlüftung 14 bzw. zur Entleerung des Filtratraumes. Das Filtrat wird mindestens durch eine der Filtratauslassöffnungen 3 abgeführt. Filtratauslauföffnung dient gleichzeitig auch zur Entlüftung respektive Entleerung des Filtratraumes. Durch die Zuleitung 7 wird das Unfiltrat in die Filtrationseinheit 1 geleitet. Die Zuleitung 7 weist einen genormten Flansch auf, der eine einfache Installation an eine Vorrichtung zur Filtration erlaubt. Von der Zuleitung 7 wird das Unfiltrat in die Filterelemente 4' geführt. In den keramischen Filterelementen 4' werden die Trübungsstoffe des Unfiltrat durch die Filterwirkung des porösen Keramikmaterials an der Oberfläche zurückgehalten und durch nachfliessendes Unfiltrat kontinuierlich entfernt. Nach dem Durchströmen der keramischen Filterelemente 4' tritt das Unfiltrat auf der der Zuleitung entgegengesetzten Seite aus und wird durch das Mittel zur Umkehrung 6 in die keramischen Filterelemente 4 gelenkt. Das Umkehrungsmittel 6 kann in verschiedensten Ausführungsformen eingesetzt werden. So können beispielsweise gekrümmte Prallflächen oder Leitwände in dieses Umkehrungsmittel integriert sein. Ebenfalls kann an diesen Umkehrungsmitteln eine dichtend verschliessbare Entlüftungsöffnung angebracht sein. Nach dem Strömen des Unfiltrats durch das keramische Filterelement 4 und der darin stattfindenden Filtrationsvorgänge wird das verbleibende Unfiltrat durch die Ableitung 8 aus der Filtrationseinheit geführt. Die Ableitung 8 kann ebenfalls einen genormten Flansch aufweisen, der eine einfache Installation an eine Filtrationsvorrichtung ermöglicht. Das Unfiltrat kann jedoch auch durch die Ableitung 8 in die Filtrationseinheit und durch die Zuleitung 7 aus der Filtrationseinheit geführt werden.

Die Filterelemente, wie sie beispielsweise durch die Firma aaflowsystems vertrieben werden, bestehen aus einem grob porösen Trägerkörper auf den eine oder mehrere Zwischenschichten aufgebracht sind. Als letzte Schicht wird eine Trennschicht mit genau definierten Porengrössen appliziert. Als Material für den Trägerkörper sowie die Zwischen- und Trennschichten finden Aluminiumoxid, Titanoxid, Zirkonoxid und nicht oxidische Hartstoffe Verwendung.

Die Filterelemente 4, 4' in Form von Keramikstäben sind wie im Folgenden beschrieben im Filtergehäuse 2 gefasst. Die Keramikstäbe werden von oben durch das obere Fassungselement 10 eingeschoben. Die Bohrungen in dem oberen Fassungselement 10 sind daher grösser als der maximale Aussendurchmesser der Keramikstäbe. In dem unteren Fassungselement 9 sind die Bohrungen dem angeschliffenen Durchmesser der Keramikstabenden angepasst. Die Dichtung in dem unteren Fassungselement 9 erfolgt mit einer standardmässigen doppelten 0-Ring-Abdichtung 11. Im oberen Fassungselement 10 erfolgt die Abdichtung mittels eines durch eine Klemmplatte 13 zusammengequetschen O-Ringes 11. Hierdurch wird zugleich eine Dichtung zwischen dem oberen Fassungselement 10 und der Klemmplatte 13 erzielt. Das Zusammenquetschen der Dichtung erhöht zudem auch die radiale Kraft auf den Keramikstab (Filterelement 4, 4') und verhindert ein leichtgängiges Bewegen des Filterelementes 4, 4' in axialer Richtung, wie es insbesondere beim Anfahren der Anlage möglich sein kann. Ein Verschieben der Filterelemente 4, 4' in Längsrichtung wird durch beidseitige Endanschläge 12 begrenzt. Zum Schutze der Aufschlag empfindlichen Kanten der Keramikstäbe (Filterelemente 4, 4') sind die Endanschläge mit einer Gummidichtung gedämpft. Entsprechend dem jeweiligen Einsatzbereich sind die Dichtungen aus Acrylnitril-Butadien-Kautschuk (NBR), Ethylen-Propylen-Kautschuk (EPDM), Fluor-Kautschuk (FKM), Chlorbutadien-Kautschuk (CR), Styrol-Butadien-Kautschuk (SBR), Silikon-Kautschuk (VMQ), Fluorsilikon-Kautschuk (FVMQ) oder Viton ausgeführt.

Die Zuleitung 7 und die Ableitung 8 können allerdings auch so ausgeführt sein, dass eine restlose Entleerung der unteren Kammer bzw. der Zuleitung oder Ableitung gewährleistet werden kann.

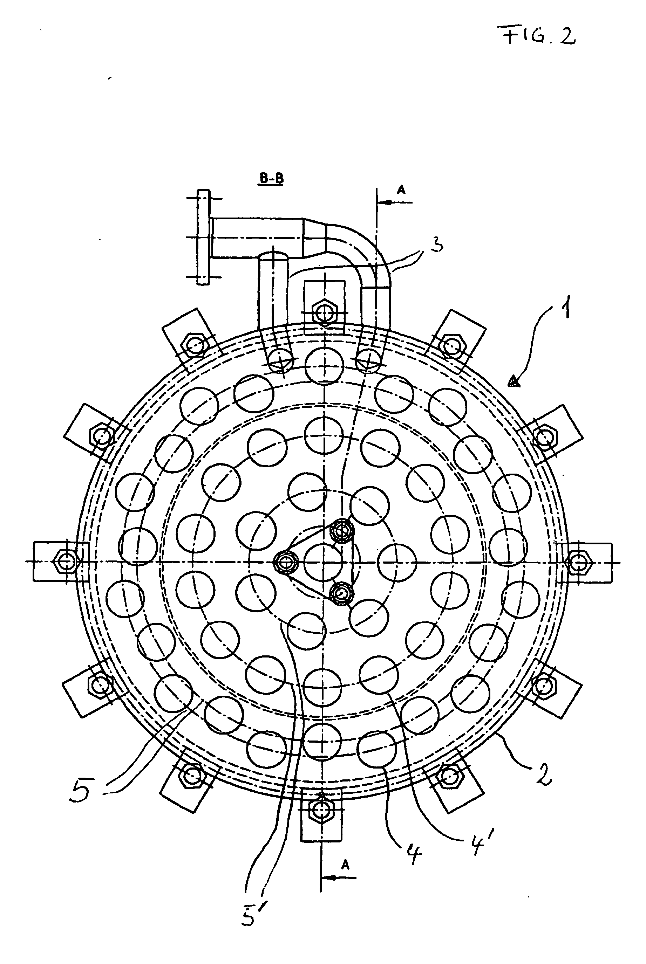

Ein Querschnitt durch eine beispielhafte Filtrationseinheit 1, wie sie Fig. 2 zeigt, verdeutlicht den Vorteil einer geordneten Anordnung der Filterelemente 4, 4'. Die Anzahl von Filterelementen 4, 4' mit jeweils identischer Querschnittsgrösse wird in zwei Gruppen 5, 5' mit jeweils gleicher Anzahl an Filterelemente 4, 4' aufgeteilt. Wie aus der Fig. 2 zu erkennen ist, sind die Filterelemente 4, 4' in der beschriebenen Ausführungsform auf jeweils konzentrischen Kreisen um den Mittelpunkt der Filtrationseinheit 1 angeordnet. Deutlich erkennbar bilden die Filterelemente 4' auf den beiden inneren Anordnungskreisen die Gruppe 5'. Analog finden sich die Filterelemente 4 auf den beiden äusseren Anordnungsringen und bilden die zweite Gruppe 5. Diese Art und Weise der Anordnung ermöglicht eine einfache Anschliessung der Zuleitung 7 bzw. der Ableitung 8 an das Filtergehäuse 2. Das aufgrund der Filterwirkung der porösen keramischen Filterelemente 4, 4' gebildete Filtrat wird durch die Filtratauslassöffnungen 3 aus dem Filtergehäuse 2 herausgeführt.
Abweichend von in Figur 2 dargestellten Anordnung kann sich die Anzahl der Filterelemente 4 bzw. 4' in den Gruppen 5, 5' dann unterscheiden, wenn die Filterelemente 4 eine andere Querschnittsgrösse aufweisen als die Filterelemente 4'. Bei der Auswahl der Filterelemente 4 bzw. 4' ist dann aber zu beachten, dass in der jeweiligen Summe der Strömungswiderstand bzw. das Durchströmungsvolumen der Filterelemente 4 bzw. 4' einen identischen Wert aufweist. Eine solche Auswahl unterschiedlicher Querschnittsgrössen der Filterelemente 4, 4' kann sich vorteilhaft auf die räumliche Ausgestaltung der Filtrationseinheit 1 auswirken.

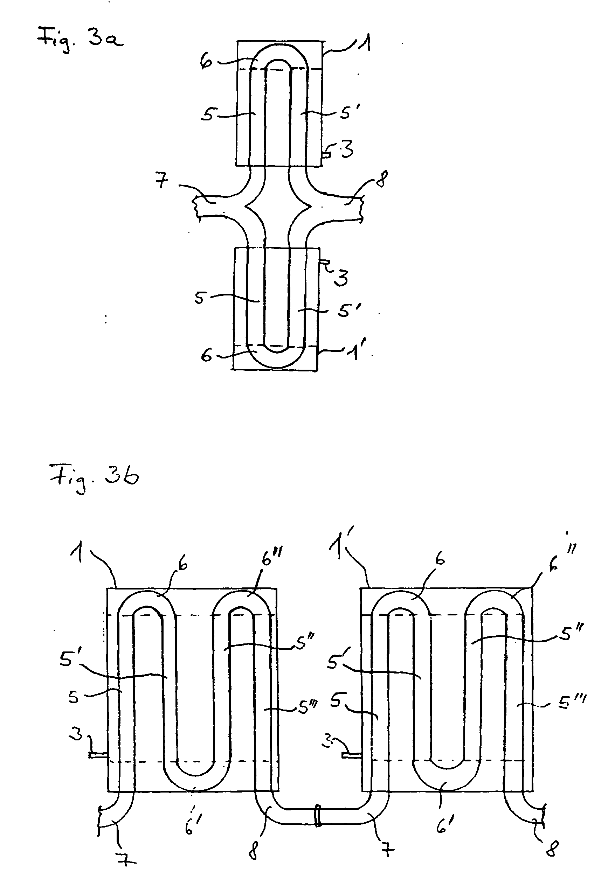

Die Möglichkeit einer parallelen Anordnung zweier erfindungsgemässen Filtrationseinheiten 1, 1' zeigt Figur 3a. Beide Filtrationseinheiten 1, 1' werden über eine gemeinsame Zuleitung 7 für das Unfiltrat angeschlossen. Nach dem Durchströmen einer ersten Gruppe 5 von Filterelementen wird der Unfiltratstrom im Innern der Filtrationseinheiten 1 bzw. 1' durch die Umkehrung 6 in seiner Richtung umgelenkt und fliesst durch eine zweite Gruppe 5' von Filterelementen. Das verbleibende Unfiltrat wird aus der jeweiligen Filtrationseinheit 1, 1' in der gemeinsamen Ableitung 8 zusammengeführt und kann einer weiteren Filtration unterworfen werden. Das gewonnene Filtrat wird aus den Filtrationseinheiten 1, 1' über den Filtratauslass 3 entnommen.

Eine weitere Möglichkeit zur Anordnung von erfindungsgemässen Filtrationseinheit 1, 1' ist schematisch in Figur 3b dargestellt. In dieser Ausführungsform sind die Filtrationseinheiten 1, 1' in Serie angeordnet. Zusätzlich ist in der Figur 3b die Filtrationseinheit 1, 1' so ausgestaltet, dass der Unfiltratstrom innerhalb der Filtrationseinheit 1, 1' mehrfach umgelenkt wird. Das Unfiltrat wird durch die Zuleitung 7 in die Filtrationseinheit 1 geleitet, durchfliesst die erste Gruppe 5 von Filterelementen und wird durch die Umkehrung 6 in die zweite Gruppe 5' von Filterelementen gelenkt. Durch die Umkehrung 6' wird das Unfiltrat wiederum umgelenkt und durchströmt eine dritte Gruppe 5'' von Filterelementen. Die Fliessrichtung des Unfiltrats innerhalb der dritten Gruppen 5" von Filterelementen ist identisch mit der Fliessrichtung innerhalb der erste Gruppe 5. Aufgrund der Umkehrung 6'' wird das Unfiltrat aus der dritten Gruppe 5" in die vierte Gruppe 5''' von Filterelementen umgelenkt. Damit ist die Fliessrichtung des Unfiltrats innerhalb der vierten Gruppen 5"' von Filterelementen wiederum identisch mit der Fliessrichtung innerhalb der zweiten Gruppe 5'. Nach der vierten Gruppe 5"' von Filterelementen wird das verbleibende Unfiltrat aus der Filtrationseinheit 1 durch die Ableitung 8 weggeführt und gelangt über die entsprechende Zuleitung 7 in die Filtrationseinheit 1'. Die Filtrationseinheit 1' ist analog der Filtrationseinheit 1 aufgebaut. Das gewonnene Filtrat wird aus den Filtrationseinheiten 1, 1' über den Filtratauslass 3 entnommen. Selbstverständlich können auch mehr als zwei solcher Filtrationseinheiten 1, 1' in Serie angeordnet werden.

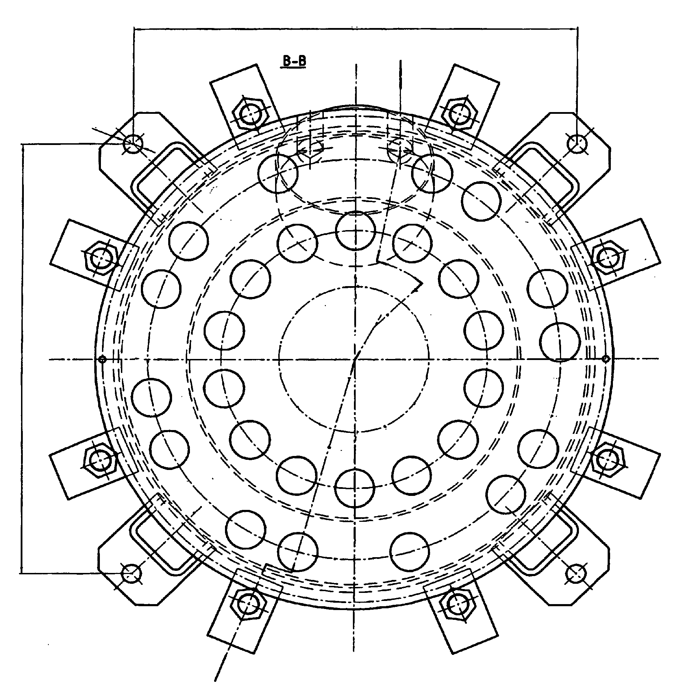

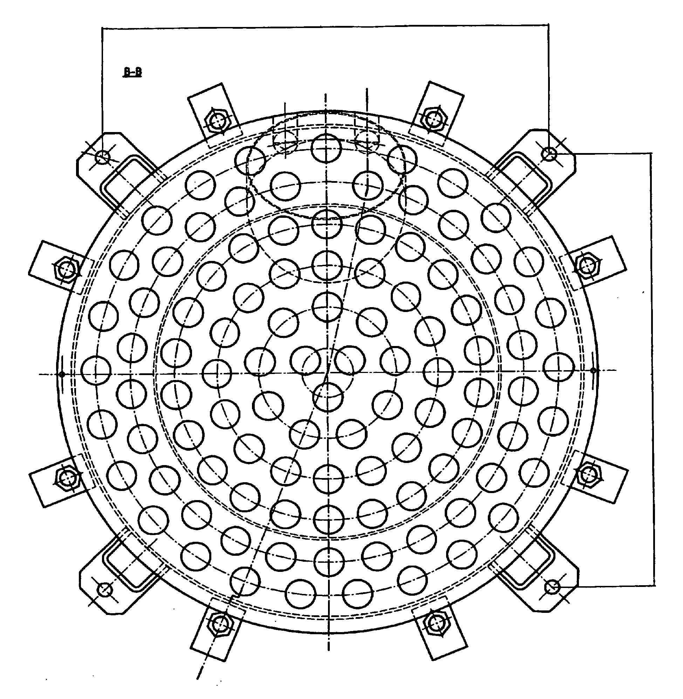

Weitere Möglichkeiten der Anordnung der Gruppen 5, 5' von Filterelementen 4, 4' sind in den Figuren 4a und 4b dargestellt, in Analogie zur Figur 2. In Figur 4a sind die beiden Gruppen 5 und 5' auf jeweils einem konzentrischen Kreis um den Mittelpunkt der Filtrationseinheit 1 angeordnet. Diese Anordnung ist insbesondere für eine Filtrationseinheit 1 mit einer kleinen Anzahl an Filterelementen 4, 4' unter Erhalt der strömungstechnisch vorteilhaften Verhältnisse vorteilhaft. Für eine Filtrationseinheit 1 mit einer grossen Zahl an Filterelementen 4, 4' ist eine Anordnung entsprechend der Figur 4b geeignet. Die Filterelemente 4' der Gruppe 5' befinden sich auf vier konzentrischen Kreisen um den Mittelpunkt angeordnet; die Filterelemente 4 der Gruppe 5 können auf zwei, im radial äusseren Bereich auf zwei konzentrischen Kreisen um den Mittelpunkt angeordnet werden.

## Patentansprüche

1. Filtrationseinheit (1) zur Crossflow-Filtration von Flüssigkeiten enthaltend ein Filtergehäuse. (2) zum Ableiten von Filtrat, welches Filtergehäuse (2) wenigstens zwei rohrförmige, keramische Filterelemente (4, 4') zur Durchleitung des Unfiltrats enthält, wobei die Filterelemente (4, 4') in wenigstens zwei Gruppen (5, 5') angeordnet sind und die Filterelemente. (4, 4') jeder Gruppe derart mit einer Anordnung zum Leiten des Unfiltrats verbunden sind, dass das Unfiltrat in der ersten Gruppe (5) von Filterelementen (4) in einer Strömungsrichtung und in der zweiten Gruppe (5') in der entgegengesetzten Richtung strömt, die Filterelemente (4') der ersten Gruppe (5') auf ein oder mehreren, insbesondere auf zwei inneren, konzentrischen Kreisen um den Mittelpunkt der Filtrationseihheit (1) angeordnet sind und die Filterelemente (4) der zweiten Gruppe (5) auf einen oder mehreren äusseren, konzentrischen Kreisen um den Mittelpunkt der Filtrationseinheit (1) angeordnet sind, **dadurch gekennzeichnet, dass** das Filtergehäuse (2) eine grössere geradzahlige Anzahl als zwei an Gruppen (5, 5') von keramischen Filterelementen (4, 4') enthält,
die der Zuleitung (7) und Ableitung (8) gegenüberliegenden Seite des Filtergehäuses (2) mindestens ein Mittel zur Umkehrung (6) der Durchflussrichtung des Unfiltrats enthält und
auf der Seite der Zuleitung (7) und Ableitung (8) zusätzlich mindestens ein Mittel zur Umkehrung der Durchflussrichtung angeordnet ist.

2. Filtrationseinheit (1) nach Anspruch 1, **dadurch gekennzeichnet, dass** das Unfiltrat auf einer Seite des Filtergehäuses (2) zugeleitet und auf derselben Seite abgeleitet wird.

3. Filtrationseinheit (1) nach einem der Ansprüche 1 oder 2, **dadurch gekennzeichnet, dass** eine Zuleitung (7) die erste Gruppe (5') der Filterelemente (4') des Filtergehäuses anschliesst und dass eine Ableitung (8) die andere Gruppe (5) der Filterelemente (4) des Filtergehäuses (2) anschliesst.

4. Filtrationseinheit (1) nach einem der Ansprüche 1 bis 3, **dadurch gekennzeichnet, dass** die Zuleitung (7) und die Ableitung (8) des Unfiltrats gegeneinander abgedichtet an das Filtergehäuse (2) des Filtrationseinheit (1) angeflanscht sind.

5. Filtrationseinheit (1) nach einem der Ansprüche 1 bis 4, **dadurch gekennzeichnet, dass** die keramischen Filterelemente (4, 4') wenigstens einer Gruppe (5, 5') unmittelbar parallel nebeneinander angeordnet sind.

6. Filtrationseinheit (1) nach einem der Ansprüche 1 bis 5, **dadurch gekennzeichnet, dass** das Mittel zur Umkehrung der Durchflussrichtung und/oder die Zuleitung (7) und/oder die Ableitung (8) des Unfiltrats fest mit dem Gehäuse (2) verbunden sind.

7. Filtrationseinheit (1) nach einem der Ansprüche 1 bis 6, **dadurch gekennzeichnet, dass** das Filtergehäuse (2) mindestens eine Filtratauslassöffnung (3) aufweist.

8. Vorrichtung zur Filtration von Flüssigkeiten enthaltend mindestens eine Filtrationseinheit (1) nach einem der Ansprüche 1 bis 7 und wenigstens eine Pumpe zum Pumpen des Unfiltrats durch die Filtrationseinheit (1).

9. Verfahren zur Filtration von trüben Flüssigkeiten im Bereich der Lebensmitteltechnologie bzw. im biotechnologischen Bereich in einer Filtrationseinheit (1) nach einem der Ansprüche 1 bis 7, **gekennzeichnet durch** die Schritte:
a) Zuführung des Unfiltrat **durch** ein Zuleitungselement (7) zu einem Filtergehäuse mit wenigstens zwei keramischen Filterelementen (4, 4');
b) Durchführung des Unfiltrats **durch** mindestens eine Gruppe (5, 5') von keramischen Filterelementen (4, 4');
c) Umkehrung der Fliessrichtung des Unfiltrats mit mindestens einem Mittel zur Umkehrung (6) der Fliessrichtung;
d) Durchführung des Unfiltrats **durch** die zweite Gruppe (5, 5') von keramischen Filterelementen (4, 4'), die nicht für Schritt b) eingesetzt werden, mit einer der Fliessrichtung des Schrittes b) entgegengesetzten Fliessrichtung; und
e) Ausleitung des nicht filtrierten Unfiltrats **durch** eine Ableitung (8) mit einer von der Zuleitung (7) flüssigkeitsdicht abgetrennten Flüssigkeitsführung.

10. Verfahren zur Filtration von Flüssigkeiten nach Anspruch 9, **dadurch gekennzeichnet, dass** mehrere Filtrationseinheiten (1) seriell oder parallel angeordnet sind.

11. Verfahren zur Filtration von Flüssigkeiten nach einem der Ansprüche 9. oder 10, **dadurch gekennzeichnet, dass** das Unfiltrat nach dem Schritt d) wenigstens einer weiteren Schrittfolge c), b), c) und d) durch wenigstens zwei weitere Gruppen (5, 5') von Filterelementen (4, 4') innerhalb der Filtrationseinheit (1) geführt wird.

12. Verfahren zur Filtration von Flüssigkeiten nach einem der Ansprüche 9 bis 11, **dadurch gekennzeichnet, dass** das Unfiltrat durch die Ableitung (7) zugeführt wird und durch die Zuleitung (7) abgeführt wird.

## Claims

1. A filtration unit (1) for the cross-flow filtration of liquids comprising a filter housing (2) for the discharge of filtrate, which filter housing (2) comprises at least two tubular ceramic filter elements (4, 4') for passing the non-filtrate therethrough, wherein the filter elements (4, 4') are arranged in at least two groups (5, 5') and the filter elements (4, 4') of each group are connected to an arrangement for guiding the non-filtrate in such a way that the non-filtrate flows in a flow direction in the first group (5) of filter elements (4) and flows in the opposite direction in the second group (5'), the filter elements (4') of the first group (5') are arranged on one or more and in particular on two inner concentric circles around the centre point of the filtration unit (1) and the filter elements (4) of the second group (5) are arranged on one or more outer concentric circles around the centre point of the filtration unit (1), **characterised in that** the filter housing (2) includes a larger even number than two of groups (5, 5') of ceramic filter elements (4, 4'),
the side of the filter housing (2), which is in opposite relationship to the feed line (7) and the discharge line (8), contains at least one means (6) for reversing the through-flow direction of the non-filtrate, and
at least one means for reversing the through-flow direction is additionally arranged on the side of the feed line (7) and discharge line (8).

2. A filtration unit (1) according to claim 1 **characterised in that** the non-filtrate is fed on one side of the filter housing (2) and discharged on the same side.

3. A filtration unit (1) according to one of claims 1 and 2 **characterised in that** a feed line (7) connects to the first group (5') of the filter elements (4') of the filter housing and a discharge line (8) connects to the other group (5) of the filter elements (4) of the filter housing (2).

4. A filtration unit (1) according to one of claims 1 to 3 **characterised in that** the feed line (7) and the discharge line (8) of the non-filtrate are flange-connected in sealed-off relationship relative to each other to the filter housing (2) of the filtration unit (1).

5. A filtration unit (1) according to one of claims 1 to 4 **characterised in that** the ceramic filter elements (4, 4') of at least one group (5, 5') are arranged in directly parallel mutually juxtaposed relationship.

6. A filtration unit (1) according to one of claims 1 to 5 **characterised in that** the means for reversing the through-flow direction and/or the feed line (7) and/or the discharge line (8) for the non-filtrate are fixedly connected to the housing (2).

7. A filtration unit (1) according to one of claims 1 to 6 **characterised in that** the filter housing (2) has at least one filtrate outlet opening (3).

8. Apparatus for the filtration of liquids comprising at least one filtration unit (1) according to one of claims 1 to 7 and at least one pump for pumping the non-filtrate through the filtration unit (1).

9. A method of filtering cloudy liquids in the sector of foodstuffs technology or in the biotechnological sector in a filtration unit (1) according to one of claims 1 to 8 **characterised by** the steps:
a) supplying the non-filtrate through a feed line element (7) to a filter housing having at least two ceramic filter elements (4, 4');
b) passing the non-filtrate through at least one group (5, 5') of ceramic filter elements (4, 4');
c) reversing the flow direction of the non-filtrate with at least one means (6) for reversing the flow direction;
d) passing the non-filtrate through the second group (5, 5') of ceramic filter elements (4, 4') which are not used for step b) with a flow direction in opposite relationship to the flow direction in step b); and
e) discharging the non-filtered non-filtrate through a discharge line (8) with a liquid guidance which is liquid-tightly separated from the feed line (7).

10. A method of filtering liquids according to claim 9 **characterised in that** a plurality of filtration units (1) are arranged in serial or parallel relationship.

11. A method of filtering liquids according to one of claims 9 and 10 **characterised in that** the non-filtrate is passed after step d) of at least one further sequence of steps c), b), c) and d) through at least two further groups (5, 5') of filter elements (4, 4') within the filtration unit (1).

12. A method of filtering liquids according to one of claims 9 to 11 **characterised in that** the non-filtrate is fed through the discharge line (7) and discharged through the feed line (7).

## Revendications

1. Unité filtrante (1) pour la filtration à courant transversal de liquides, comprenant une enveloppe filtrante (2) pour l'écoulement du filtrat, laquelle enveloppe filtrante (2) contient au moins deux éléments filtrants tubulaires en céramique (4, 4') pour le passage du produit à filtrer, étant précisé que les éléments filtrants (4, 4) sont disposés en au moins deux groupes (5, 5'), que les éléments filtrants (4, 4') de chaque groupe sont reliés à un dispositif pour guider le produit à filtrer de telle sorte que celui-ci s'écoule dans un sens dans le premier groupe (5) d'éléments filtrants (4) et dans le sens opposé dans le second groupe (5'), que les éléments filtrants (4') du premier groupe (5') sont disposés sur un ou plusieurs, notamment deux cercles concentriques intérieurs autour du centre de l'unité filtrante (1) et que les éléments filtrants (4) du second groupe (5) sont disposés sur un ou plusieurs cercles concentriques extérieurs autour du centre de l'unité filtrante (1),
**caractérisée en ce que** l'enveloppe filtrante (2) contient un nombre pair de groupes (5, 5') d'éléments filtrants en céramique (4, 4') qui est supérieur à deux,
le côté de l'enveloppe filtrante (2) opposé à la conduite d'amenée (7) et à la conduite d'évacuation (8) contient au moins un moyen pour inverser (6) le sens de passage du produit à filtrer,
et il est prévu en supplément, sur le côté de la conduite d'amenée (7) et de la conduite d'évacuation (8), au moins un moyen pour inverser le sens de passage.

2. Unité filtrante (1) selon la revendication 1, **caractérisée en ce que** le produit à filtrer est amené d'un côté de l'enveloppe filtrante (2) et est évacué du même côté.

3. Unité filtrante (1) selon la revendication 1 ou 2, **caractérisée en ce qu'**une conduite d'amenée (7) relie le premier groupe (5') d'éléments filtrants (4') de l'enveloppe filtrante (2) et **en ce qu'**une conduite d'évacuation (8) relie l'autre groupe (5) d'éléments filtrants (4) de l'enveloppe filtrante (2).

4. Unité filtrante (1) selon l'une des revendications 1 à 3, **caractérisée en ce que** la conduite d'amenée (7) et la conduite d'évacuation (8) du produit à filtrer sont reliées par bridage à l'enveloppe filtrante (2) de l'unité filtrante (1) en étant étanches l'une par rapport à l'autre.

5. Unité filtrante (1) selon l'une des revendications 1 à 4, **caractérisée en ce que** les éléments filtrants en céramique (4, 4') d'au moins un groupe (5, 5') sont placés directement côte à côte, parallèlement.

6. Unité filtrante (1) selon l'une des revendications 1 à 5, **caractérisée en ce que** le moyen pour inverser le sens de passage et/ou la conduite d'amenée (7) et la conduite d'évacuation (8) du produit à filtrer sont reliés solidement à l'enveloppe (2).

7. Unité filtrante (1) selon l'une des revendications 1 à 6, **caractérisée en ce que** l'enveloppe filtrante (2) présente au moins une ouverture de sortie de filtrat (3).

8. Dispositif pour filtrer des liquides, contenant au moins une unité filtrante (1) selon l'une des revendications 1 à 7 et au moins une pompe pour pomper le produit à filtrer à travers l'unité filtrante (1).

9. Procédé pour filtrer des liquides troubles dans le domaine de la technologie alimentaire ou dans le domaine biotechnologique dans une unité filtrante (1) selon l'une des revendications 1 à 7, **caractérisé par** les étapes suivantes :
a) amenée du produit à filtrer, par un élément d'amenée (7), dans une enveloppe filtrante avec au moins deux éléments filtrants en céramique (4, 4) ;
b) passage du produit à filtrer à travers au moins un groupe (5, 5') d'éléments filtrants en céramique (4, 4') ;
c) inversion du sens d'écoulement du produit à filtrer à l'aide d'au moins un moyen d'inversion (6) du sens d'écoulement ;
d) passage du produit à filtrer à travers le second groupe (5, 5') d'éléments filtrants en céramique (4, 4') qui ne sont pas utilisés pour l'étape b), dans un sens d'écoulement opposé au sens d'écoulement de l'étape b) ; et
e) évacuation du produit non filtré par une conduite d'évacuation (8) avec un guidage de liquide séparé de la conduite d'amenée (7) de manière étanche au liquide.

10. Procédé pour filtrer des liquides selon la revendication 9, **caractérisé en ce que** plusieurs unités filtrantes (1) sont disposées en série ou parallèlement.

11. Procédé pour filtrer des liquides selon la revendication 9 ou 10, **caractérisé en ce que** le produit à filtrer, après l'étape d), est soumis au moins à une suite supplémentaire des étapes c), b), c) et d) à travers au moins deux autres groupes (5, 5') d'éléments filtrants (4, 4') à l'intérieur de l'unité filtrante (1).

12. Procédé pour filtrer des liquides selon l'une des revendications 9 à 11, **caractérisé en ce que** le produit à filtrer est amené par la conduite d'évacuation (7) et est évacué par la conduite d'amenée (7).
